# EUROPÄISCHE PATENTSCHRIFT

(11) **EP 3 608 572 B1**
(45) Veröffentlichungstag und Bekanntmachung des Hinweises auf die Patenterteilung: **17.05.2023**
(21) Anmeldenummer: 18188492.5
(22) Anmeldetag: 10.08.2018
(51) Int. Cl.: F16L 19/02, F16L 25/00, F16L 35/00

(54) **ROHRVERBINDUNG**
PIPE CONNECTION
RACCORD DE TUYAUTERIE

(43) Veröffentlichungstag der Anmeldung: 12.02.2020
(73) Patentinhaber: R. Nussbaum AG, 4600 Olten 1 (CH)
(72) Erfinder: Meinl, Markus, 5600 Lenzburg (CH)
(74) Vertreter: Keller Schneider Patent- und Markenanwälte AG

(56) Entgegenhaltungen:
- EP-A1- 1 260 750
- EP-A1- 2 366 934
- WO-A1-02/08565
- DE-A1- 1 475 742
- DE-A1-102007 022 799
- DE-U1- 29 900 952
- DE-U1-202004 019 100
- FR-A1- 2 811 738
- US-A1- 2016 245 443

## Beschreibung

### Technisches Gebiet

Die Erfindung betrifft eine Rohrverbindung umfassend einen ersten Rohrstutzen und einen zweiten Rohrstutzen. Weiter betrifft die Erfindung ein Verfahren zum Verbinden eines ersten Rohrstutzens mit einem zweiten Rohrstutzen, sowie eine Rohrleitung und eine Armatur umfassend einen ersten und/oder zweiten Rohrstutzen.

### Stand der Technik

Rohrverbindungen, insbesondere im Bereich der Wasserversorgung, aber auch bei Gasleitungen, Industrieleitungen oder ähnlichen Gebieten, sind in vielen Varianten bekannt. In der Wasserversorgung wurden herkömmliche Rohrverbindungen eingesetzt, bei welchen eine Rohrleitung jeweils ein Aussengewinde umfasst. Zwei solche Rohrleitungen werden mittels Hanf und Dichtpaste mit einer Mutter verbunden. Analog kann eine solche Rohrleitung in ein Innengewinde einer Armatur geschraubt werden. Heute existiert eine Vielzahl an weiteren möglichen Rohrverbindungen im Trinkwasserbereich, welche zum Beispiel Presshülsen, Schweissverfahren etc. umfassen.

Die DE 42 27 319 A1 (Linnemann) zeigt beispielhaft eine Rohrverschraubung mit einem Gewindestutzen, einem Gegenstutzen, einem in einer Ringnut gelagerten verformbaren Dichtring und einer Überwurfmutter, wobei der Gewindestutzen und der Gegenstutzen radial spielfrei ineinander greifen und dass ein die Verformung des Dichtringbundes in axialer Richtung begrenzender Anschlag vorgesehen ist. Die Überwurfmutter ist mit einer den Anschlag hintergreifenden Rückwand auf einer ringförmigen Schulter des Gegenstutzens drehbar gelagert.

Die WO 02/08565 A1 zeigt eine Gestängekupplung, wie sie zum Verbinden der Gestängeschüsse von Geräten zum grabenlosen Verlegen oder Ersetzen von Rohrleitungen bekannt ist, mit formschlüssigen Verbindungsmitteln, die gewindefrei und mit Hilfe einer zusätzlichen Gewindeverbindung axial spielfrei verbindbar sind.

Die bekannten Rohrverbindungen haben den Nachteil, dass eine effiziente Montage und sichere Montage nur durch geschultes Personal erreichbar ist.

### Darstellung der Erfindung

Aufgabe der Erfindung ist es, eine dem eingangs genannten technischen Gebiet zugehörende Rohrverbindung zu schaffen, welche besonders einfach erreicht werde kann. Die Lösung der Aufgabe ist durch die Merkmale des Anspruchs 1 definiert. Gemäss der Erfindung sind der erste Rohrstutzen und der zweite Rohrstutzen derart ausgebildet, dass der erste Rohrstutzen mittels eines durch den ersten und den zweiten Rohrstutzen gebildeten ersten Formschlusses am zweiten Rohrstutzen verdrehgesichert gehalten werden kann.

Damit wird erreicht, dass bei der Verbindung des ersten Rohrstutzens mit dem zweiten Rohrstutzen eine radiale Orientierung fixiert werden kann. Der Anwender muss sich damit nicht weiter auf die radiale Orientierung achten und kann sich dementsprechend auf die axiale Fixierung des zweiten Rohrstutzens am ersten Rohrstutzens konzentrieren.

Der Begriff "a und/oder b" wird nachfolgend als mindestens eines der Elemente a und b verstanden, d.h. als "a" oder "b" oder "a und b".

Unter dem Begriff "verbundener Zustand" in Bezug auf die Rohrverbindung wird der Betriebszustand der Rohrverbindung verstanden.

Unter dem Begriff "Rohrstutzen" wird nachfolgend ein Endbereich eines Rohres oder einer Armatur verstanden. Die Armatur kann als Ventil, insbesondere als Spindelventil, Kugelventil, Druckreduzierventil etc. ausgebildet sein. Der erste und/oder zweite Rohrstutzen kann aber auch als Teil einer Rohrverzweigung oder dergleichen ausgebildet sein. Damit kann zum Beispiel eine Rohrleitung, insbesondere eine Trinkwasserrohrleitung einen ersten und/oder einen zweiten Rohrstutzen umfassen. Falls die Trinkwasserrohrleitung am einen Ende einen ersten und am gegenüberliegenden Ende einen zweiten Rohrstutzen aufweist, können beliebig viele solcher Trinkwasserrohrleitungen in Serie verbunden werden. Alternativ kann jeweils eine Rohrleitung lediglich erste respektive zweite Rohrstutzen umfassen, während ein Kopplungsstück, eine Verzweigung oder eine Armatur jeweils den anderen Rohrstutzen umfasst. Damit kann insbesondere auch eine Armatur einen ersten und/oder einen zweiten Rohrstutzen umfassen. Die Rohrverbindung kann zum Beispiel für Rohrnenngrössen zwischen 1/8 Zoll und 2 Zoll vorgesehen sein. Dem Fachmann ist klar, dass die Rohrnenngrössen auch kleiner oder grösser vorliegend können. Die Rohrdurchmesser können auch metrisch etc. sein.

Die Rohrverbindung kann im Wesentlichen aus Metall oder Kunststoff ausgebildet sein. Als Kunststoff können zum Beispiel PVC, ABS, SAN, PMMA etc. vorgesehen sein. Weiter können auch Verbundstoffe, insbesondere zum Beispiel faserverstärkte Kunststoffe vorgesehen sein. Als Metalle können Aluminium, Kupfer, aber auch Metalllegierungen wie Stahl, insbesondere verzinkter oder rostfreier Stahl, Kupfer, Rotguss etc. vorgesehen sein.

Während der erste und der zweite Rohrstutzen vorzugsweise - jedoch nicht zwingend - aus demselben Material bestehen, können jedoch weitere Elemente vorgesehen sein, welche aus einem anderen Material aufgebaut sind, insbesondere kann zum Beispiel die Aussenhülse (siehe unten) aus Kunststoff ausgebildet sein, während die Rohrstutzen aus eine Metalllegierung bestehen. Dem Fachmann sind weitere geeignete Materialien bekannt.

Vorzugsweise handelt es sich bei den Rohrstutzen um Teile eines Trinkwasserverteilsystems. Unter dem Begriff "Trinkwasserverteilsystem" wird demnach vorzugsweise ein Verteilsystem innerhalb eines Gebäudes respektive zum direkten Verbinden von zum Gebäude peripheren Wasserverbrauchern, wie Gartenanlagen, Brunnen etc verstanden Das Gebäude kann gleichermassen ein Wohngebäude, Industrie- oder sonstiges Gewerbegebäude sein. Dem Fachmann ist aber klar, dass die Technik gegebenenfalls auch in artverwandten Gebieten eingesetzt werden könnte, wie zum Beispiel im Bereich der Gebäudeheizungen, Gasleitungen aber auch in der Industrie. Weiter kann die Rohrverbindung auch ausserhalb von Gebäuden eingesetzt werden.

Unter dem ersten Formschluss ist eine Formgebung des ersten und des zweiten Rohrstutzens zu verstehen, welche derart ausgebildet sind, dass der erste und der zweite Rohrstutzen koaxial orientiert derart in Kontakt gebracht werden können, dass ein gegenseitiges Verdrehen um die Längsachsen des ersten und des zweiten Rohrstutzens unterbunden ist. Dem Fachmann sind mehrere solche Möglichkeiten bekannt.

Vorzugsweise ist der erste Rohrstutzen in den zweiten Rohrstutzen zumindest teilweise einschiebbar. Damit wird eine für den Anwender besonders ergonomisch ausführbare Kopplung des ersten Rohrstutzens mit dem zweiten Rohrstutzen ermöglicht. Weiter wird dadurch eine besonders einfache und stabile Ausbildung des ersten Formschlusses ermöglicht. Der erste Formschluss kann damit zum Beispiel am ersten Rohrstutzen aussenseitig zumindest bereichsweise eine nicht-runde Aussenkontur aufweisen, während der zweite Rohrstutzen zumindest bereichsweise eine entsprechende nicht-runde Innenkontur aufweist, so dass in verbundenem Zustand die Innenkontur in Kontakt mit der Aussenkontur steht, um den ersten Formschluss zu bilden. Eine entsprechende Ausgestaltung kann zum Beispiel durch radiale Verformungen der Rohrstutzen erreicht werden, bei welcher die Innenkontur des zweiten Rohrstutzens kongruent zur Aussenkontur des ersten Rohrstutzens ist.

In Varianten kann die Rohrverbindung auch einen Stoss aufweisen, so dass der erste Rohrstutzen und der zweite Rohrstutzen lediglich mit den Stirnflächen zusammen stossen. Die Verdrehsicherung kann damit durch die axiale Form der Stirnflächen erreicht sein, wobei zum Beispiel der erste Rohrstutzen zwei oder mehr axial orientierte Zapfen und der zweite Rohrstutzen entsprechende Bohrungen aufweist. Weiter können die Stirnflächen derart ausgebildet sein, dass eine axial konvexe Form des ersten Rohrstutzens in eine axial konkave Form des zweiten Rohrstutzens geführt wird. Zum Beispiel können die Stirnflächen zackenförmig ausgebildet sein, wobei die Zacken axial ausgerichtet sind (ähnlich einem Tellerrad aus dem Getriebebau).

Vorzugsweise ist die Rohrverbindung als reversible Rohrverbindung ausgebildet. Das heisst, die Rohrverbindung kann ohne Beschädigung der einzelnen Teile geöffnet und wieder verbunden werden. Damit kann zum Beispiel ein Wasserverteilsystem nach deren Erstellung in einfacher und wirtschaftlicher Weise umgebaut werden.

In Varianten kann die Rohrverbindung auch irreversibel sein. Damit ein unerwünschtes Öffnen der Rohrverbindung verhindert und damit das Wasserverteilsystem sicher gestaltet werden.

Bevorzugt sind der erste Rohrstutzen und der zweite Rohrstutzen derart ausgebildet, dass der erste Rohrstutzen in mindestens zwei unterschiedlichen Drehorientierungen, insbesondere in genau vier unterschiedlichen Drehorientierungen in verbundenem Zustand über den ersten Formschluss am zweiten Rohrstutzen rotationsfest gehalten ist, wobei die Drehorientierungen vorzugsweise über den Vollwinkel regelmässig verteilt sind. Mit der definierten Anzahl an Drehorientierungen zwischen dem ersten und dem zweiten Rohrstutzen wird die Montage vereinfacht, da keine Feinjustierung der Drehorientierung notwendig ist. Dies ist insbesondere bei der Montage von Armaturen an eine Wasserleitung von grossem Vorteil. Durch die Wahl von vier Drehorientierungen können bei der Montage vorzugsweise zwischen den Drehorientierungen mit Winkeln von 0°, 90°, 180° und 270°, d.h. vier Orientierungen, regelmässig über den Vollwinkel verteil, gewählt werden. Die unterschiedlichen Drehorientierungen können auf unterschiedliche Weisen erreicht werden. Zum Beispiel kann der erste Rohrstutzen radial abstehende Zapfen umfassen, während der zweite Rohrstutzen entsprechende Kerben zur Aufnahme der Zapfen in der Stirnfläche aufweist. Durch die Anzahl Kerben kann damit die Anzahl der Drehorientierungen definiert werden. Dem Fachmann sind weitere Varianten bekannt (siehe unten).

In Varianten kann auf die unterschiedlichen Drehorientierungen auch verzichtet werden. Die Drehorientierungen müssen nicht regelmässig über den Vollwinkel verteilt sein.

Vorzugsweise umfasst der erste Rohrstutzen eine Aussenkontur, insbesondere eine polygonale Aussenkontur, und der zweite Rohrstutzen eine Innenkontur mit mindestens einem, vorzugsweise vier axial orientierten Absätzen, welche in verbundenem Zustand mit jeweils einer Kontaktfläche der Aussenkontur derart zusammenwirken, dass der erste Formschluss gebildet wird.

Die Aussenkontur des ersten Rohrstutzens kann als Polygon ausgebildet sein, während der zweite Rohrstutzen eine entsprechende polygonale Innenkontur aufweist. Das Polygon kann zum Beispiel als regelmässiges Polygon, z.B. als Viereck, Sechseck, Achteck etc. vorliegen. Das Polygon muss nicht zwingend regelmässig sein, so können die Kontaktflächen der Aussenkontur auch als längere Polygonseiten vorliegen, so dass zum Beispiel die Aussenkontur als Achteck vorliegt, bei welchem vier alternierende Seiten, welche die Kontaktflächen definieren, länger ausgebildet sind, als dazwischen liegende Seiten. Statt der polygonalen Aussenkontur können auch andere Aussenkonturen vorgesehen sein, mit welchen die Verdrehsicherung erreicht werden kann. So kann die Aussenkontur auch ausgehend von einer runden Querschnittsform eine oder mehrere im Querschnitt tangentiale Abflachung aufweisen. Dem Fachmann sind beliebig viele Aussenkonturen bekannt, mit welchen die Verdrehsicherung erreicht werden kann.

In der bevorzugten Ausführungsform umfasst der zweite Rohrstutzen axial orientierte Absätze, welche Kontaktflächen der Aussenkontur kontaktieren und so die Verdrehsicherung ermöglichen. Die Absätze weisen vorzugsweise jeweils eine nach innen gerichtet tangential ausgerichtete Fläche auf. Zwischen zwei Absätzen ist vorzugsweise ein Freiraum vorgesehen. Mit dieser Ausgestaltung kann der Materialaufwand minimiert werden, womit die Rohrverbindung besonders kostengünstig hergestellt werden kann.

In Varianten kann statt der Aussenkontur mit den Kontaktflächen auch eine axial ausgerichtete Verdrehsicherung vorgesehen sein (siehe oben). Auf die Absätze kann auch verzichtet werden, in diesem Fall kann eine umlaufende Innenkontur am zweiten Rohrstutzen vorgesehen sein.

Vorzugsweise umfasst der erste Rohrstutzen einen Rohrfortsatz, welcher in verbundenem Zustand in einer Aufweitung des zweiten Rohrstutzens aufgenommen ist, so dass vorzugsweise eine Innenwand des ersten Rohrstutzens und eine Innenwand des zweiten Rohrstutzens fluchten. Durch die Aufweitung des zweiten Rohrstutzens wird erreicht, dass die Rohrverbindung eine konstante Nennweite aufweisen kann. Weiter wird durch die Ausbildung des Rohrfortsatzes und der Aufweitung eine besonders stabile Verbindung zwischen den beiden Rohrstutzen erreicht. Damit kann das Medium, insbesondere das Trinkwasser, mit geringem Reibverlust durch Turbulenzen durch die Rohrverbindung transportiert werden.

In Varianten kann auf die Aufweitung des zweiten Rohrstutzens verzichtet werden, in diesem Fall kann der Rohrfortsatz des ersten Rohrstutzens eine entsprechend kleinere Nennweite aufweisen.

Bevorzugt umfasst der Rohrfortsatz und die Aufweitung einen Konus, so dass durch Einschieben des ersten Rohrstutzens in den zweiten Rohrstutzen eine Presspassung erreichbar ist. Damit kann eine besonders dichte Verbindung erreicht werden. Insbesondere können damit Herstellungstoleranzen bei den beiden Rohrstutzen aufgenommen werden. Besonders bevorzugt weist der Konus einen Winkel zur Längsachse von weniger als 5°, insbesondere weniger als 2°, zum Beispiel zwischen 0.8° und 1.2° auf. In einer bevorzugten Ausführungsform beträgt der Konuswinkel 1°. Dem Fachmann ist klar, dass der Konuswinkel auch geringer als 1° sein kann.

Alternativ kann auf den Konus auch verzichtet werden.

Vorzugsweise schliesst sich der Rohrfortsatz in distaler Richtung an die Aussenkontur an. Die Aussenkontur bildet bevorzugt einen Anschlag am zweiten Rohrstutzen. Damit wird die Montage weiter vereinfacht, da der erste Rohrstutzen durch den Anwender nach Ausrichtung der Drehorientierung bis an den Anschlag in den zweiten Rohrstutzen einführen kann.

In Varianten kann die Aussenkontur auch am distalen Ende des Rohrfortsatzes angeordnet sein. In diesem Fall würde der Rohrfortsatz zumindest einen Umkreisdurchmesser der Aussenkontur aufweisen.

Vorzugsweise ist zwischen dem ersten Rohrstutzen und dem zweiten Rohrstutzen eine Dichtung, insbesondere eine radiale Dichtung angeordnet. Insbesondere bei einer konischen Ausbildung des Rohrstutzens und der Aufweitung kann damit die Dichtwirkung optimiert werden, da durch die vorzugsweise geringe Steigung der Konen eine grosse radiale Kraftwirkung erreicht werden kann.

In Varianten kann die Dichtung auch axial, zum Beispiel zwischen einem Absatz der Aufweitung und einer Stirnfläche des Rohrstutzens angeordnet sein.

Vorzugsweise umfasst der Rohrfortsatz eine umlaufende Nut, in welcher eine, vorzugsweise als O-Ring ausgebildete Dichtung angeordnet ist. Damit kann die Dichtung während dem Einführen des ersten Rohrstutzens in den zweiten Rohrstutzen ortsfest gehalten werden.

In Varianten kann die Dichtung auch in einer innen umlaufenden Nut der Aufweitung des zweiten Rohrstutzens angeordnet sein.

Erfindungsgemäß umfasst die Rohrverbindung eine formschlüssig am zweiten Rohrstutzen axial fixierbare Aussenhülse, insbesondere eine Überwurfmutter, womit in verbundenem Zustand der erste Rohrstutzen axial gehalten ist. Damit wird eine Rohrverbindung geschaffen, bei welcher zwei Rohrstutzen axial und radial durch einen Formschluss gehalten sind und wobei die beiden Rohrstutzen zusätzlich durch einen Formschluss verdrehgesichert sind. Damit wird eine besonders sichere Rohrverbindung geschaffen.

Erfindungsgemäß ist in verbundenem Zustand der erste Rohrstutzen durch die Aussenhülse mittels eines zweiten Formschlusses axial gehalten.

Erfindungsgemäß umfasst der zweite Formschluss an der Aussenhülse einen, zumindest bereichsweise umlaufenden, radial nach innen ragenden Absatz und der erste Rohrstutzen einen, zumindest bereichsweise umlaufenden, radial nach aussen ragenden Flansch, wobei in verbundenem Zustand der Flansch den Absatz hintergreift. Damit wird ein besonders einfach ausgebildeter Formschluss zum axialen Halten des ersten Rohrstutzens am zweiten Rohrstutzen bereitgestellt.

In einer besonders bevorzugten Ausführungsform, in welcher die Aussenhülse als Überwurfmutter ausgebildet ist, kann durch Drehung der Überwurfmutter der Flansch des ersten Rohrstutzens hin zum zweiten Rohrstutzen angezogen werden, um eine form- und kraftschlüssige Rohrverbindung zu erreichen.

In Varianten kann der erste Rohrstutzen ein Aussengewinde aufweisen, auf welchem die Aussenhülse aufschraubbar ist, während der Absatz der Aussenhülse durch einen umlaufenden Flansch des zweiten Rohrstutzens hintergriffen wird. Weiter kann zum Beispiel die Aussenhülse in der Art eines Bajonettverschlusses den ersten Rohrstutzen am zweiten Rohrstutzen halten. Dem Fachmann sind weitere Möglichkeiten bekannt.

Vorzugsweise umfasst der Flansch die Aussenkontur. Damit kann der Flansch eine Doppelfunktion einnehmen, indem er einerseits die formschlüssige Verdrehsicherung gegenüber dem zweiten Rohrstutzen bereitstellt und zudem die formschlüssige axiale Fixierung des ersten Rohrstutzen am zweiten Rohrstutzen sicherstellt. Die Rohrverbindung kann damit besonders einfach und kostengünstig aufgebaut sein.

In Varianten können der Flansch und die Aussenkontur auch als separate Elemente vorgesehen sein, welche insbesondere bezüglich einer Rohrstutzen-Längsachse zueinander beabstandet sind.

Erfindungsgemäß ist der Flansch in einer ersten Drehorientierung relativ zur Aussenhülse durch eine durch den Absatz begrenzte Öffnung hindurchschiebbar und in einer zweiten Drehorientierung relativ zur Aussenhülse nicht durch die Öffnung hindurchschiebbar. Diese Ausbildung der Aussenhülse hat den Vorteil, dass die Aussenhülse nicht vorgängig bereits am ersten Rohrstutzen angeordnet sein muss.

Bei herkömmlichen Systemen ist die Überwurfmutter lose an einem, einen Flansch aufweisenden Rohrstutzen vormontiert. Die Überwurfmutter hat damit keine definierte Lage und kann sich frei entlang des Rohrteils bewegen. Nach dem Zusammenführen der Rohrteile muss der Anwender einerseits dafür sorgen, dass die Rohrteile ihre Ausrichtung behalten und zugleich muss er die Überwurfmutter aus einer undefinierten Lage holen. Diese kann unter Umständen, bei geneigtem Rohrabschnitt, ausserhalb der Reichweite des Anwenders liegen, so dass der Anwender von vorne beginnen muss. Auch wenn der Anwender die Überwurfmutter erreicht, muss er typischerweise die Rohrabschnitte weiterhin zueinander ausrichten und gleichzeitig mit der Überwurfmutter das Aussengewinde des Rohrabschnitts treffen. Um solche Montagen effizient durchführen zu können wird vom Fachmann viel Routine abverlangt.

Die Aussenhülse kann nun bevorzugt am zweiten Rohrstuten bereits vorbefestigt sein, insbesondere im Falle einer Ausbildung der Aussenhülse als Überwurfmutter kann letztere am ersten Rohrstutzen teilweise aufgeschraubt sein, bevor der erste Rohrstutzen durch die Aussenhülse hindurch in die Aufweitung des zweiten Rohrstutzens eingeschoben wird. Damit hat die Aussenhülse während der Montage respektive während dem Verbinden der Rohrstutzen eine definierte Lage. Damit wird die Montage als Ganzes vereinfacht, da der Anwender lediglich den ersten Rohrstutzen in den zweiten Rohrstutzen einführen und anschliessend die bereits vormontierte Aussenhülse festziehen kann.

Da nun der erste Rohrstutzen beim Einschieben in den zweiten Rohrstutzen verdrehgesichert gehalten ist, wird zur axialen Fixierung des ersten Rohrstutzens die Aussenhülse um einen Winkel verdreht. Es ist klar, dass die Verdrehung der Aussenhülse ungleich 360° beträgt, da in dieser Orientierung der Flansch den Absatz wiederum nicht hintergreift.

In Varianten kann auch auf die Durchschiebbarkeit des Flansches durch den Absatz verzichtet werden.

Bevorzugt unterscheiden sich die erste und die zweite Drehorientierung um einen Winkel von 360°/N, wobei N eine natürliche Zahl grösser als 2 ist, insbesondere wobei N gleich 4 ist. Vorzugsweise entspricht die Anzahl der Drehorientierungen der Zahl N. In der besonders bevorzugten Ausführungsform mit N=4 ergeben sich somit vier nachfolgende Drehorientierungen in einem Winkelabstand von jeweils 90°, das heisst die Drehorientierungen bei 90°, 180°, 270° und 360°. Mit diesen vier Drehorientierungen können in einfacher Weise Armaturen und/oder Rohrleitungen kartesisch montiert werden. Vorzugsweise ist daher N=4*k, mit k grösser oder gleich 1, so dass die drei orthogonalen Raumrichtungen abgedeckt werden können. Dem Fachmann ist jedoch klar, dass N nicht zwingend durch vier teilbar sein muss. Auch können zwischen benachbarten Drehorientierungen auch unterschiedliche Winkelabstände vorgesehen sein, zum Beispiel können bei N=6 die Drehorientierungen 60°, 120°, 180°, 300°, 360° vorgesehen sein, so dass der Winkel 240° fehlt und damit 5 Winkelabstände jeweils 60° betragen, während einer 120° beträgt (namentlich zwischen Drehorientierung 120° und 300°).

In der Verwendung wird nach dem Einschieben des ersten Rohrstutzens in den zweiten Rohrstutzen die Aussenhülse um einen Winkel verdreht. Der Verdrehwinkel hängt nun von der Anzahl Drehorientierungen ab, in welchen der Flansch durch die durch den Absatz definierte Öffnung hindurch führbar ist. Der Verdrehwinkel liegt vorzugsweise im Bereich eines halben Winkelabstandes. Anders ausgedrückt beträgt der Verdrehwinkel zum axialen fixieren des ersten Rohrstutzens am zweiten Rohrstutzen vorzugsweise bei 360°/(2N). Im Falle von N=4 liegt der Verdrehwinkel bevorzugt bei 45°. Dem Fachmann ist klar, dass der Verdrehwinkel theoretisch jeden Wert grösser als 0° und kleiner als 90° einnehmen kann.

Durch das Verdrehen der Aussenhülse in die Schliessstellung, wird vorzugsweise die Aussenhülse hin zum zweiten Rohrstutzen angezogen. Dies wird durch die Ausbildung der Aussenhülse als Überwurfmutter erreicht. Damit kann der Flansch und damit der erste Rohrstutzen an den zweiten Rohrstutzen gezogen werden, um gleichzeitig eine form -und kraftschlüssige Verbindung zu erreichen. Falls die Aufweitung und der Rohrfortsatz konisch ausgebildet sind, kann damit zwischen der Aufweitung und dem Rohrfortsatz ein Pressdruck erreicht werden, welche die Dichtheit der Verbindung unterstützt.

In einer weiteren bevorzugten Ausführungsform weist die Aussenhülse und der erste Rohrstutzen respektive der erste Rohrstutzen eine lösbare Rastvorrichtung auf, welche während des Verdrehens der Aussenhülse eine haptische und/oder akustische Rückmeldung für das Erreichen der Schliessstellung gibt. Dazu kann zum Beispiel die Aussenhülse innen Rastnocken aufweisen, welche in Rasttaschen des Flansches einrasten können.

In Varianten kann auch ein Winkel gewählt werden, welcher nicht gleichmässig über den Vollwinkel von 360° verteilbar ist.

Vorzugsweise umfasst der zweite Rohrstutzen eine Markierung, insbesondere einen aussen umlaufenden O-Ring, welche in verbundenem Zustand durch die Aussenhülse verdeckt wird und in nicht verbundenem Zustand nicht verdeckt wird. In einer besonders bevorzugten Ausführungsform ist die Markierung derart positioniert, dass diese beim Zudrehen einer als Überwurfmutter ausgebildeten Aussenhülse gleichzeitig mit dem Erreichen des verbundenen Zustands verdeckt wird. Damit ist die Markierung, insbesondere der O-Ring - welcher zum Beispiel eine auffällige Farbe, wie zum Beispiel in roter, gelber etc. Warnfarbe oder dergleichen eingefärbt sein kann - vorzugsweise am zweiten Rohrstutzen angeordnet. In weiteren Varianten kann der O-Ring auch als Kunststofflappen oder dergleichen ausgebildet sein, welcher durch schnappen über eine Kante eine haptische und/oder akustische Rückmeldung zum Erreichen des verbundenen Zustandes gibt. Die haptische und/oder akustische Rückmeldung kann jedoch auch separat, durch weitere dem Fachmann bekannte Mittel bereit gestellt sein.

In Varianten kann auf die Markierung auch verzichtet werden.

Vorzugsweise ist in verbundenem Zustand die Rohrverbindung mit einer Plombe derart plombiert, dass die Rohrverbindung nur durch Entfernen der Plombe öffenbar ist. Damit kann in der Verwendung überprüft werden, ob die Rohrverbindung durch nicht autorisierte Personen geöffnet wurde. Dies kann zum Beispiel zum Nachweis bei Garantieansprüchen von grossem Nutzen sein. Daher ist die Plombe derart beschaffen, dass sie bei der Entfernung zwangsläufig zerstört wird, womit kein erneutes Befestigen derselben Plombe möglich ist.

In Varianten kann auf die Plombe auch verzichtet werden.

Vorzugsweise ist die Plombe derart beschaffen, dass das Öffnen der Rohrverbindung bei intakter Plombe nicht respektive nicht werkzeuglos möglich ist. Damit wird sichergestellt, dass die Plombe nicht versehentlich zerstört wird.

In Varianten kann die Plombe derart beschaffen sein, dass durch das Öffnen der Rohrverbindung die Plombe zerstört wird. Dazu kann die Plombe zum Beispiel als Klebeetikette ausgebildet sein.

Im verbundenen Zustand wird vorzugsweisse die Aussenhülse durch die Plombe am ersten Rohrstutzen axial fixiert. Damit kann die Aussenhülse in verbundenem Zustand nicht gelöst werden, womit wiederum die Rohrverbindung nicht geöffnet werden kann, ohne die Plombe zu beschädigen.

In Varianten kann die Plombe die Aussenhülse auch am zweiten Rohrstutzen fixieren. Es ist von Vorteil, wenn die Plombe die Aussenhülse mit einem der Rohrstutzen verbindet, da damit ein Entfernen der Aussenhülse verhindert werden kann. Weiter kann aber die Plombe auch alle drei Teile, namentlich den ersten und zweiten Rohrstutzen sowie die Aussenhülse, miteinander verbinden. Die beiden Rohrstutzen können auch über ein Band oder einen Draht derart miteinander plombiert sein, dass die Aussenhülse nicht ohne Beschädigung des Bades oder Drahtes bewegt werden kann.

Vorzugsweise umfasst die Plombe einen in einer Nut des ersten Rohrstutzens gehaltenen Plombenring, welcher in verbundenem Zustand die Aussenhülse axial fixiert. Vorzugsweise ist der Plombenring als ein zu den Rohrstutzen und der Aussenhülse separater Teil ausgebildet, so dass dieser im Bedarfsfall kostengünstig und einfach ersetzt werden kann.

In Varianten kann die Plombe auch als Plombenstift oder Plombendraht ausgebildet sein, mit welchem jeweils eine Lasche des ersten Rohrstutzens und der Aussenhülse zusammengehalten werden.

Vorzugsweise umfasst der Plombenring einen Verschluss, welcher insbesondere über eine Sollbruchstelle geöffnet werden kann. Damit kann im Nachhinein festgestellt werden, ob die Plombe geöffnet wurde. Die Sollbruchstelle soll prinzipiell ein Öffnen des Plombenrings ermöglichen, allerdings nicht zerstörungsfrei. Dieser Verschluss kann zum Beispiel in der Art eines Kabelbinders und damit besonders kostengünstig ausgebildet sein. Damit kann der Verschluss des Plombenrings am einen Ende des offenen Rings eine Raste umfassen, welche in Zugrichtung mit entsprechenden Rasthaken oder einer Riffelung des anderen Endes des Plombenrings zusammenwirkt. Damit wird ein einfaches Zusammenführen der Enden ermöglicht. Weiter kann der Plombenring an dem einen Ende auch eine einfache tangential ausgerichtete und hinterschnittene Bohrung umfassen, in welche Widerhacken des zweiten Endes des Plombenrings unlösbar eingreifen kann.

In Varianten kann der Plombenring auch verklebt werden, insbesondere mit einem markierten Plombenklebestreifen oder dergleichen. Dem Fachmann sind weitere Varianten bekannt.

In einem Verfahren zum Verbinden eines ersten Rohrstutzens mit einem zweiten Rohrstutzen wird der erste Rohrstutzen formschlüssig am zweiten Rohrstutzen derart montiert, dass der erste Rohrstutzen verdrehgesichert am zweiten Rohrstutzen gehalten ist. Die Verdrehsicherung ist dabei durch den ersten und den zweiten Rohrstutzen bereitgestellt, so dass für die Verdrehsicherung keine weiteren Befestigungsmittel benötigt werden.

Im Verfahren zum Verbinden eines ersten Rohrstutzens mit einem zweiten Rohrstutzen können weiter die folgenden Schritte ausgeführt werden:
1. Lose Aufschrauben der Aussenhülse auf den zweiten Rohrstutzen. Die Aussenhülse kann alternativ bereits lose auf dem zweiten Rohrstutzen aufgeschraubt angeliefert werden, so dass die Montage effizient durchgeführt werden kann. Zudem kann damit die Gefahr minimiert werden, dass die Aussenhülse verloren geht.
2. Orientieren und Einführen des zweiten Rohrstutzens in die Aussenhülse derart, dass der Flansch durch die Öffnung hindurch geführt ist. Dazu wird eine Drehorientierung des ersten Rohrstutzens gewählt, in welcher der erste Rohrstutzen relativ zum zweiten Rohrstutzen in der Rohrverbindung fixiert werden soll. In einer bevorzugten Ausführungsform kann zwischen vier möglichen Drehorientierungen 0°, 90°, 180° und 270° entschieden werden.
3. Verdrehen der Aussenhülse um einen Winkel kleiner als 360°, insbesondere um 45°, so dass der Flansch den Absatz hintergreift. Bei einer Ausführungsform mit genau vier Drehorientierungen wird die Aussenhülse um einen Winkel von 45° verdreht.
4. Falls vorgesehen wird in eine Nut des ersten Rohrstutzens ein Plombenring eingesetzt, womit die Aussenhülse, insbesondere zwischen dem Plombenring und dem zweiten Rohrstutzen axial fixiert ist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Schrägansicht auf den ersten Rohrstutzen, die Überwurfmutter und den zweiten Rohrstutzen der Rohrverbindung;
- Fig. 2: eine schematische Draufsicht auf die Rohrverbindung in axialer Richtung, auf den ersten Rohrstutzen bei offener und geschlossener Rohrverbindung;
- Fig. 3: eine schematische Schrägansicht auf eine Rohrverbindung bei aufgeschnittener Überwurfmutter;
- Fig. 4: eine schematische Darstellung eines Schnittes der Rohrverbindung entlang der Längsachse bei offener und geschlossener Rohrverbindung;
- Fig. 4a: eine vergrösserte Detailansicht der Markierung in offenem Zustand der Rohrverbindung gemäss dem Ausschnitt X der Figur 4; und
- Fig. 4b: eine vergrösserte Detailansicht der Markierung in geschlossenem Zustand der Rohrverbindung gemäss dem Ausschnitt Y der Figur 4.

Grundsätzlich sind in den Figuren gleiche Teile mit gleichen Bezugszeichen versehen.

### Wege zur Ausführung der Erfindung

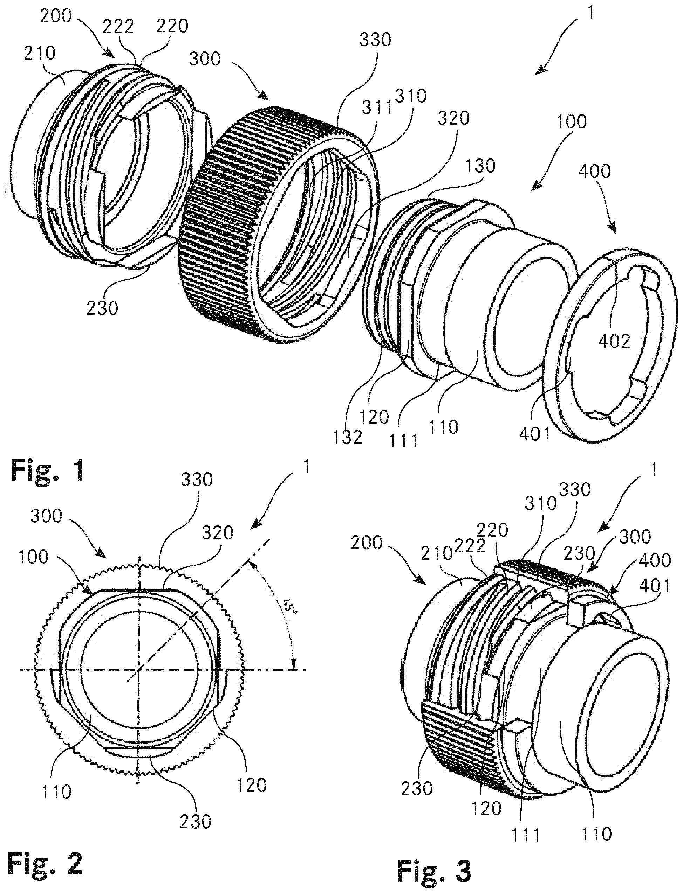

Die Figur 1 zeigt eine schematische Schrägansicht auf den ersten Rohrstutzen 100, die Überwurfmutter 300 und den zweiten Rohrstutzen 200 der Rohrverbindung 1.

Der erste Rohrstutzen 100 weist eine im Wesentlichen kreiszylindrische Form auf. Im distalen Bereich umfasst der Rohrstutzen 100 einen Rohrfortsatz 130. Dieser weist einen geringen Konus mit einem Winkel von ungefähr 1° auf, wobei sich der Durchmesser des Rohrfortsatzes 130 hin zum Distalen Ende verjüngt. Der Rohrfortsatz 130 umfasst eine aussen umlaufende Nut 131, in welcher eine Dichtung - vorliegend ein O-Ring 132 eingelassen ist, welcher teilweise radial über die Nut hinaussteht. An den Rohrfortsatz 130 schliesst sich in proximaler Richtung ein Flansch 120 an. Der Flansch 120 weist in einem Querschnitt quer zur Rohrachse eine achteckige Form auf. Die Seitenlängen des Achtecks sind jedoch nicht alle identisch, die ungeraden Seiten sind etwas kürzer als die geraden Seiten. Weiter weisen die kürzeren Seiten eine Bogenform auf. Wiederum in proximaler Richtung schliesst sich an den Flansch 120 ein Rohrstück 110 an. An den Flansch 120 anschliessend umfasst das Rohrstück 110 eine umlaufende Aussennut 111 zur Aufnahme eines Plombenrings 400 (siehe unten). Das Rohrstück 110 kann Teil einer längeren Rohrleitung sein, welche gerade oder gebogen ist. Weiter kann das Rohrstück 110 auch Teil einer Armatur oder dergleichen sein.

Der zweite Rohrstutzen 200 ist ebenfalls im Wesentlichen kreiszylindrisch ausgebildet. Am distalen Ende umfasst der zweite Rohrstutzen 200 vier regelmässig umfangseitig angeordnete Absätze 230. Aussenseitig weisen die Absätze 230 jeweils eine Kreisbogenform auf. Die Innenseite der Absätze 230 ist jeweils flach ausgebildet. Die Innenseite der Absätze 230 kontaktiert in geschlossenem Zustand der Rohrverbindung 1 die längeren Aussenseiten des achteckförmigen Flansches 120, womit der erste Rohrstutzen 100 am zweiten Rohrstutzen 200 verdrehgesichert gehalten ist. Zwischen den Absätzen 230 ist ein Freiraum ausgebildet, in welchen jeweils die kürzeren Seiten des Achtecks des Flansches 120 aufgenommen werden. Aufgrund der Drehsymmetrie des Achtecks des Flansches sowie der Absätze 230 kann der erste Rohrstutzen in vier unterschiedlichen Orientierungen in den zweiten Rohrstutzen 200 eingesteckt werden, so dass die Innenflächen der Absätze 230 die längeren Achteckseiten des Flansches kontaktieren und die Verdrehsicherung erreicht wird. Bei in den zweiten Rohrstutzen 200 eingesteckten ersten Rohrstutzen 100 bilden die kürzeren Seiten des achteckigen Flansches zusammen mit den Absätzen 230 aussen, in einem Querschnitt zur Rohrachse eine Kreisform. Dem Fachmann ist klar, dass die Anzahl Absätze 230 und die Form des Flansches 120 beliebig anderweitig gestaltet werden kann. Zu einer Anzahl an Absätzen können jeweils die doppelte Anzahl Ecken des Vielecks vorgesehen sein. Zum Beispiel können sechs Absätze am zweiten Rohrstutzen vorgesehen sein, während am ersten Rohrstutzen der Flansch 12-eckig ausgebildet wird etc. Auch müssen die kürzeren Seiten des achteckigen Flansches 120 zusammen mit den Absätzen 230 nicht zwingend eine Kreisform bilden.

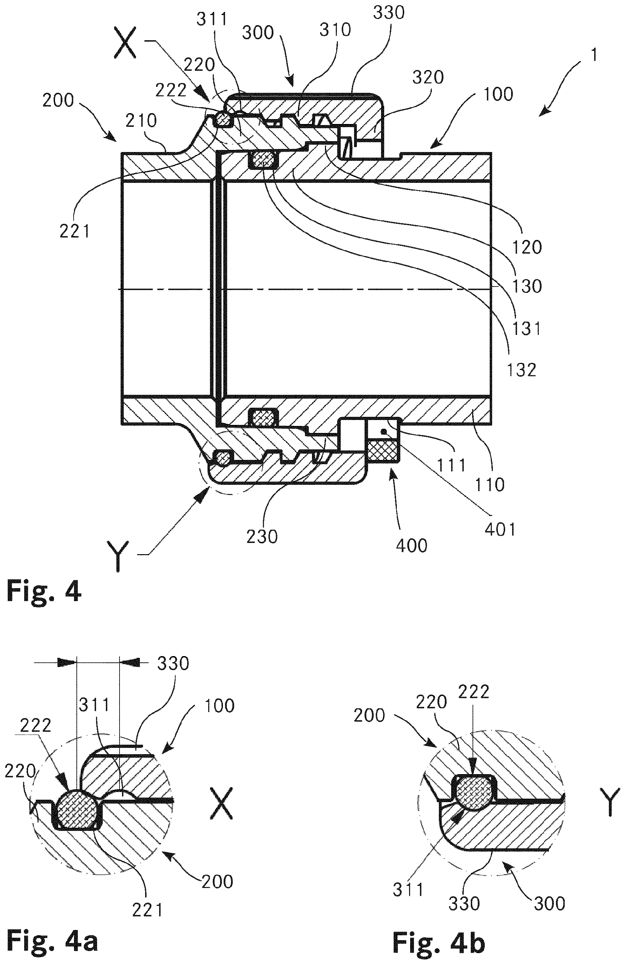

In proximaler Richtung schliesst sich an die Absätze 230 des zweiten Rohrstutzens 200 ein Gewindebereich 220 mit einem Aussengewinde an. Innerhalb des Gewindebereichs 220 weist der zweite Rohrstutzen 200 einen Durchmesser auf, welcher dem Aussendurchmesser des Rohrfortsatzes 130 des ersten Rohrstutzens entspricht. Insbesondere weist der Gewindebereich 220 ebenfalls einen Konus mit einem Winkel von 1° auf, wobei sich der Innendurchmesser in proximaler Richtung verringert. Das Gewinde 220 umfasst vier Gänge und weist vorliegend eine Steigung von 12mm auf. Andere Anzahl Gewindegänge und andere Steigungen sind auch denkbar. Das Gewinde 220 ragt radial über die Absätze hinaus. Proximal an das Gewinde 220 schliesst sich eine umlaufende Nut 221 (ersichtlich in Figur 4) mit einer rot markierten Dichtung 222 an. Wiederum proximal zur Nut 221 schliesst sich ein Rohrstück 210 an. Das Rohrstück 210 kann Teil einer längeren Rohrleitung sein, welche gerade oder gebogen ist. Weiter kann das Rohrstück 210 auch Teil einer Armatur oder dergleichen sein. Das Rohrstück 210 weist einen geringeren Innendurchmesser auf, als der Gewindebereich 220.

Die Überwurfmutter 300 ist im Wesentlichen kreiszylindrisch ausgebildet und weist aussen eine Rändelung 330 auf, womit von Hand eine bessere Griffigkeit erreicht wird. Stirnseitig weist die Überwurfmutter 300 einen nach innen ragenden Absatz 320 auf, welcher eine achteckige Durchgangsöffnung definiert. Die Durchgangsöffnung ist derart ausgebildet, dass bei korrekt ausgerichteten ersten Rohrstutzen 100 der Flansch 120 durch die Durchgangsöffnung hindurch geführt werden kann. Werden anschliessend die Überwurfmutter 300 und der erste Rohrstutzen 100 gegeneinander um einen Winkel zwischen 0° und 90°, insbesondere zum Beispiel 45° verdreht, hintergreift der Flansch 120 den Absatz 320, womit eine formschlüssige Verbindung erreicht wird (siehe Figur 2, 3).

An den Absatz 320 schliesst sich ein Innengewindebereich 310 an, welches dem Aussengewinde des Gewindebereichs 220 entspricht.

Weiter umfasst die Rohrverbindung 1 in der vorliegenden Ausführungsform eine Plombe in Form eines Plombenrings 400. Der Plombenring ist im Wesentlichen als Kreisring ausgebildet und umfasst am Innenumfang drei regelmässig beabstandete Ausnehmungen 401. Diese Ausnehmungen 401 ermöglichen das spätere Entfernen des Plombenrings 400 unter Zerstörung desselben. Weiter wird durch die Ausnehmungen 401 das Auseinanderbiegen des Plombenrings 400 bei der Montage erleichtert. Der Plombenring 400 umfasst einen Plombenverschluss 402, welcher vorliegend lediglich als Unterbrechung des Plombenrings 400 dargestellt ist. In der bevorzugten Ausführungsform umfasst der Plombenverschluss 402 eine Kabelbinder-ähnliche Ratsche.

In der Verwendung wird in einem ersten Schritt die Überwurfmutter 300 auf das Aussengewinde des Gewindebereichs 220 des zweiten Rohrstutzens 200 teilweise aufgeschraubt, so dass die Innenflächen der Absätze 230 mit den längeren Achteckseiten der Durchgangsöffnung fluchten. Wird nun der erste Rohrstutzen 100 durch die Durchgangsöffnung der Überwurfmutter 300 hindurch in den zweiten Rohrstutzen 200 geschoben, so wird der Rohrfortsatz 130 in den Gewindebereich 220 des zweiten Rohrstutzens 200 geführt. Der erste und der zweite Rohrstutzen 100 und 200 sind dadurch bereits so ausgerichtet, dass der Flansch 120 nicht an die Absätze 230 anschlägt, sondern dass die Absätze 230 jeweils über die längeren Seiten des Flansches 120 geschoben werden und so die Verdrehsicherung bilden. Durch die konische Ausbildung des Innenbereichs des Gewindebereichs 220 und des Rohrfortsatzes 130 wird die Dichtung 132 an die Innenwand des Gewindebereichs 220 gepresst. Damit wird bereits eine Dichte Verbindung zwischen den beiden Rohrstutzen 100 und 200 erreicht. In einem letzten Schritt wird die Überwurfmutter 300 von Hand um einen Winkel von 45° rotiert. Damit wird mit dem Absatz 320 der Flansch 120 zum zweiten Rohrstutzen 200 gezogen. Gleichzeitig wird die Dichtung 132 an die Innenwand des Gewindebereichs 220 gepresst und erhöht damit die Dichtwirkung weiter. Schliesslich wird durch die Rotation der Überwurfmutter 300 die rot markierte Dichtung 222 überdeckt, womit dem Verwender signalisiert wird, dass die Rohrverbindung 1 geschlossen ist.

Um nun sicherzustellen, dass die Rorhverbindung nicht unkontrolliert geöffnet wird, kann weiter der Plombenring 400 in der Nut 111 des ersten Rohrstutzens 100 montiert werden. Dazu wird der Plombenring 400 elastisch derart verformt, dass dieser über den ersten Rohrstutzen 100 gestülpt werden kann. Anschliessend wird der Plombenverschluss 402 geschlossen. Der Plombenring 400 verhindert so, dass die Überwurfmutter geöffnet werden kann, da diese in Öffnungsrichtung am Plombenring 400 und dieser wiederum am Nutrand der Nut 111 anschlägt (siehe dazu auch Figur 3).

Die Figur 2 zeigt eine schematische Draufsicht auf die Rohrverbindung 1 in axialer Richtung, auf den ersten Rohrstutzen 100 bei offener und geschlossener Rohrverbindung 1. Die obere Hälfte zeigt die offene Rohrverbindung 1, der Flansch 120 deckt sich mit dem Absatz 320, so dass der erste Rohrstutzen 100 durch die Durchgangsöffnung der Überwurfmutter 300 geführt werden kann. Die untere Hälfte zeigt die geschlossene Rohrverbindung 1, in welcher kürzere Seiten des achteckigen Flansches 120 den Absatz 320 hintergreifen.

Die Figur 3 zeigt eine schematische Schrägansicht auf eine Rohrverbindung 1 bei aufgeschnittener Überwurfmutter 300. Diese Figur illustriert das Zusammenwirken der Absätze 230 mit dem Flansch 120 zum Erreichen der Verdrehsicherung. Weiter ist gut ersichtlich, dass in geschlossenem Zustand der Absatz 320 der Überwurfmutter 300 durch den Flansch 120 hintergriffen ist und die rot markierte Dichtung 222 durch die Überwurfmutter 300 verdeckt ist. Weiter ist in dieser Abbildung ersichtlich, wie der Plombenring 400 die Überwurfmutter 300 axial derart fixiert, dass Rohrverbindung 1 nicht geöffnet werden kann. Soll die Rohrverbindung 1 dennoch, zum Beispiel durch eine Fachperson geöffnet werden, so kann zum Beispiel mit einem Schraubenzieher in die Ausnehmung 401 des Plombenrings 400 eingegriffen und der Plombenverschluss 402 aufgebrochen werden. Der Plombenring 400 ist danach nicht mehr verwendbar und muss beim erneuten Verbinden der Rohrverbindung 1 ersetzt werden.

Die Figur 4 zeigt eine schematische Darstellung eines Schnittes der Rohrverbindung 1 entlang der Längsachse des Rohres bei offener und geschlossener Rohrverbindung 1. Dabei ist gut ersichtlich, dass die Innendurchmesser des ersten Rohrstutzens 100 und des Rohrstücks 210 übereinstimmen und in zusammengeführtem Zustand fluchten, womit die Rohrverbindung 1 als Ganzes den Strömungswiderstand des Wasserverteilsystems kaum verändert.

In der oberen Hälfte ist die offene Rohrverbindung 1, bei welcher der erste Rohrstutzen 100 vollständig in den zweiten Rohrstutzen 200 eingeführt ist, gezeigt. Die Überwurfmutter 300 ist nicht vollständig angezogen, so dass der Absatz 320 den Flansch 120 nicht kontaktiert. Die rot markierte Dichtung 222 ist durch die Überwurfmutter 300 freigegeben, so dass für den Anwender auch erkennbar ist, dass die Rohrverbindung 1 nicht geschlossen ist. Der Plombenring 400 ist nicht eingesetzt. Durch die konische Verbindung des Rohrfortsatzes 130 in dem Gewindeabschnitt 220 sowie durch die Dichtung 132 ist die Rohrverbindung 1 dennoch bereits dicht.

Um die Rohrverbindung 1 zu schliessen, wird nun die Überwurfmutter 300 um einen Winkel von 45° rotiert. Durch das Gewinde verfährt die Überwurfmutter 300 in Richtung der rot markierten Dichtung 222 und überdeckt diese. Damit wird dem Anwender signalisiert, dass die Rohrverbindung 1 geschlossen ist. Gleichzeitig wird mit dem Absatz 320 der erste Rohrstutzen formschlüssig über den Flansch 120 am zweiten Rohrstutzen 200 gehalten. Abschliessend wird der Plombenring 400 in die Nut 111 gesetzt und der Plombenverschluss 402 verriegelt.

Die Figur 4a zeigt eine vergrösserte Detailansicht der rot markierten Dichtung in offenem Zustand der Rohrverbindung gemäss dem Ausschnitt X der Figur 4. Die Überwurfmutter 300 umfasst innen, in einem dem Absatz 320 gegenüberliegenden Endbereich, eine umlaufende Kerbe, in welche die rot markierte Dichtung 222 einschnappen kann. Der Weg, welcher dazu verfahren wird, beträgt beispielsweise bei einer Gewindesteigung von 12 mm und einem Rotationswinkel von 45° rund 1,5 mm bei einer Nennweite von ¾ Zoll. Dem Fachmann ist klar, dass die Dimensionierung auch anders gewählt sein kann. Insbesondere die Gewindesteigung wird typischerweise der Nennweite der Rohre angepasst.

Die Figur 4b zeigt eine vergrösserte Detailansicht der rot markierten Dichtung in geschlossenem Zustand der Rohrverbindung 1 gemäss dem Ausschnitt Y der Figur 4. Die rot markierte Dichtung 222 ist in der Kerbe 311 der Überwurfmutter 300 aufgenommen. In dieser Darstellung ist ersichtlich, dass die Stirnkante der Überwurfmutter 300 angeschrägt ist, so dass die rot markierte Dichtung 222 nicht weg gedrückt wird, sondern in Richtung der Nut 221 nach unten gepresst wird. Im Endzustand entspannt sich die rot markierte Dichtung 222 in die Kerbe 222, womit eine haptische Rückmeldung erreicht werden kann.

Zusammenfassend ist festzustellen, dass erfindungsgemäss eine besonders einfache zu bedienende und gleichzeitig stabile Rohrverbindung, insbesondere zum Anschliessen von Armaturen an eine Rohrleitung, geschaffen wird. Insbesondere wird damit eine Rohrverbindung geschaffen, welche ohne Werkzeug geschlossen und auch geöffnet werden kann. Damit kann die Effizienz und damit die Wirtschaftlichkeit bei Armatur- und Rohrinstallationen erhöht werden.

## Patentansprüche

1. Rohrverbindung (1), insbesondere für ein Trinl<wasserverteilsystem, umfassend einen ersten Rohrstutzen (100) und einen zweiten Rohrstutzen (200), wobei der erste Rohrstutzen (100) und der zweite Rohrstutzen (200) derart ausgebildet sind, dass der erste Rohrstutzen (100) mittels eines durch den ersten und den zweiten Rohrstutzen (200) gebildeten ersten Formschlusses (120, 230) am zweiten Rohrstutzen (200) verdrehgesichert gehalten werden kann, und wobei die Rohrverbindung eine formschlüssig am zweiten Rohrstutzen (200) axial fixierbare Aussenhülse (300), insbesondere eine Überwurfmutter, umfasst, womit in verbundenem Zustand der erste Rohrstutzen (100) axial gehalten ist, wobei in verbundenem Zustand der erste Rohrstutzen (100) durch die Aussenhülse (300) mittels eines zweiten Formschlusses (120, 320) axial gehalten ist, und wobei der zweite Formschluss (120, 320) an der Aussenhülse einen, zumindest bereichsweise umlaufenden, radial nach innen ragenden Absatz (320) und der erste Rohrstutzen (100) einen, zumindest bereichsweise umlaufenden, radial nach aussen ragenden Flansch (120) umfasst, wobei in verbundenem Zustand der Flansch (120) den Absatz (320) hintergreift, wobei insbesondere der Flansch (120) die Aussenkontur umfasst, **dadurch gekennzeichnet, dass** der Flansch (120) in einer ersten Drehorientierung relativ zur Aussenhülse durch eine durch den Absatz begrenzte Öffnung hindurchschiebbar ist und in einer zweiten Drehorientierung relativ zur Aussenhülse (300) nicht durch die Öffnung hindurchschiebbar ist.

2. Rohrverbindung (1) nach Anspruch 1, **dadurch gekennzeichnet, dass** der erste Rohrstutzen (100) und der zweite Rohrstutzen (200) derart ausgebildet sind, dass der erste Rohrstutzen (100) in mindestens zwei unterschiedlichen Drehorientierungen, insbesondere in genau vier unterschiedlichen Drehorientierungen in verbundenem Zustand über den ersten Formschluss am zweiten Rohrstutzen (200) rotationsfest haltbar ist, wobei die Drehorientierungen vorzugsweise über den Vollwinkel regelmässig verteilt sind.

3. Rohrverbindung (1) nach Anspruch 2, **dadurch gekennzeichnet, dass** der erste Rohrstutzen (100) eine Aussenkontur, insbesondere eine polygonale Aussenkontur, umfasst und der zweite Rohrstutzen (200) eine Innenkontur mit mindestens einem, vorzugsweise vier axial orientierten Absätzen (230) umfasst, welche in verbundenem Zustand mit jeweils einer I<ontal<tfläche der Aussenkontur derart zusammenwirken, dass der erste Formschluss gebildet wird.

4. Rohrverbindung (1) nach einem der Ansprüche 1 bis 3, **dadurch gekennzeichnet, dass** der erste Rohrstutzen (100) einen Rohrfortsatz (130) umfasst, welcher in verbundenem Zustand in einer Aufweitung des zweiten Rohrstutzens (200) aufgenommen ist, so dass vorzugsweise eine Innenwand des ersten Rohrstutzens (100) und eine Innenwand des zweiten Rohrstutzens (200) fluchten, wobei insbesondere der Rohrfortsatz (130) und die Aufweitung einen I<onus umfassen, so dass durch Einschieben des ersten Rohrstutzens (100) in den zweiten Rohrstutzen (200) eine Presspassung erreichbar ist.

5. Rohrverbindung (1) nach einem der Ansprüche 1 bis 4, **dadurch gekennzeichnet, dass** zwischen dem ersten Rohrstutzen (100) und dem zweiten Rohrstutzen (200) eine Dichtung (132), insbesondere eine radiale Dichtung angeordnet ist.

6. Rohrverbindung (1) nach Anspruch 1, **dadurch gekennzeichnet, dass** der zweite Rohrstutzen (200) eine Markierung (222), insbesondere einen aussen umlaufenden O-Ring umfasst, welche in verbundenem Zustand durch die Aussenhülse (300) verdeckt wird und in nicht verbundenem Zustand nicht verdeckt wird.

7. Rohrverbindung (1) nach einem der Ansprüche 1 bis 6, **dadurch gekennzeichnet, dass** in verbundenem Zustand die Rohrverbindung mit einer Plombe derart plombiert ist, dass die Rohrverbindung nur durch Entfernen der Plombe öffnenbar ist.

8. Rohrverbindung (1) nach Anspruch 7, **dadurch gekennzeichnet, dass** im verbundenen Zustand die Plombe am ersten Rohrstutzen (100) die Aussenhülse (300) axial fixiert, wobei insbesondere die Plombe einen in einer Nut des ersten Rohrstutzens (100) gehaltenen Plombenring umfasst, welcher in verbundenem Zustand die Aussenhülse (300) axial fixiert.

9. Verfahren zum Verbinden eines ersten Rohrstutzens (100) mit einem zweiten Rohrstutzen (200) unter Verwendung einer Rohrverbindung (1) nach einem der vorhergehenden Ansprüche, wobei der erste Rohrstutzen (100) formschlüssig am zweiten Rohrstutzen (200) derart montiert wird, dass der erste Rohrstutzen (100) verdrehgesichert am zweiten Rohrstutzen (200) gehalten ist, **dadurch gekennzeichnet, dass** die folgenden Schritte durchgeführt werden:
1. Loses Aufschrauben der Aussenhülse (300) auf den zweiten Rohrstutzen (200);
2. Orientieren und Einführen des zweiten Rohrstutzens (200) in die Aussenhülse (300) derart, dass der Flansch (120) durch die Öffnung hindurchgeführt ist;
3. Verdrehen der Aussenhülse (300) um einen Winkel kleiner als 360°, insbesondere um 45°, so dass der Flansch den Absatz hintergreift.

10. Armatur, insbesondere eine Trinl<wasserarmatur, umfassend eine Rohrverbindung (1) gemäss einem der Ansprüche 1 bis 8.

## Claims

1. Pipe connection (1), in particular for a drinking water distribution system, comprising a first pipe socket (100) and a second pipe socket (200), the first pipe socket (100) and the second pipe socket (200) being designed in such a way that the first pipe socket (100) can be held against rotation on the second pipe socket (200) by means of a first form-fitting (120, 230) formed by the first and second pipe sockets (200), and the pipe connection comprising an outer sleeve (300), in particular a union nut, which can be fixed axially in a form-fitting manner on the second pipe socket (200), with which sleeve the first pipe socket (100) is held axially in the connected state, the first pipe socket (100) being held axially in the connected state by the outer sleeve (300) by means of a second form-fitting (120, 320), and the first pipe socket (100) being held axially in the connected state by the outer sleeve (300) by means of a second form-fitting (120, 320), 320), and wherein the second form-fitting (120, 320) on the outer sleeve comprises an at least regionally circumferential, radially inwardly projecting shoulder (320) and the first pipe socket (100) comprises an at least regionally circumferential, radially outwardly projecting flange (120), wherein in the connected state the flange (120) engages behind the shoulder (320), wherein in particular the flange (120) comprises the outer contour, **characterised in that** in a first rotational orientation relative to the outer sleeve the flange (120) can be pushed through an opening defined by the shoulder and in a second rotational orientation relative to the outer sleeve (300) it cannot be pushed through the opening.

2. Pipe connection (1) according to claim 1, **characterized in that** the first pipe socket (100) and the second pipe socket (200) are designed in such a way that the first pipe socket (100) can be held in a rotationally fixed manner in at least two different rotational orientations, in particular in exactly four different rotational orientations, in the connected state via the first form fit on the second pipe socket (200), the rotational orientations preferably being regularly distributed over the full angle.

3. Pipe connection (1) according to claim 2, **characterized in that** the first pipe socket (100) comprises an outer contour, in particular a polygonal outer contour, and the second pipe socket (200) comprises an inner contour with at least one, preferably four, axially oriented shoulders (230) which, in the connected state, interact with a respective contact surface of the outer contour in such a way that the first form-fitting is formed.

4. Pipe connection (1) according to any one of claims 1 to 3, **characterized in that** the first pipe socket (100) comprises a pipe extension (130) which, in the connected state, is received in an expansion of the second pipe socket (200), so that preferably an inner wall of the first pipe socket (100) and an inner wall of the second pipe socket (200) are aligned, wherein in particular the pipe extension (130) and the expansion comprise a cone, so that a press fit can be achieved by pushing the first pipe socket (100) into the second pipe socket (200).

5. Pipe connection (1) according to one of claims 1 to 4, **characterised in that** a seal (132), in particular a radial seal, is arranged between the first pipe socket (100) and the second pipe socket (200).

6. Pipe connection (1) according to claim 1, **characterised in that** the second pipe socket (200) comprises a marking (222), in particular an outer circumferential O-ring, which is concealed by the outer sleeve (300) in the connected state and is not concealed in the non-connected state.

7. Pipe connection (1) according to one of the claims 1 to 6, **characterised in that** in the connected state the pipe connection is sealed with a seal in such a way that the pipe connection can only be opened by removing the seal.

8. Pipe connection (1) according to claim 7, **characterized in that**, in the connected state, the seal on the first pipe socket (100) axially fixes the outer sleeve (300), the seal comprising, in particular, a seal ring which is held in a groove of the first pipe socket (100) and axially fixes the outer sleeve (300) in the connected state.

9. Method of connecting a first pipe socket (100) to a second pipe socket (200) using a pipe connection (1) according to one of the preceding claims, wherein the first pipe socket (100) is mounted in a form-fitting manner on the second pipe socket (200) in such a way that the first pipe socket (100) is held on the second pipe socket (200) in a manner secured against rotation, **characterized in that** the following steps are carried out:
1. loosely screwing the outer sleeve (300) onto the second pipe socket (200);
2. orienting and inserting the second pipe socket (200) into the outer sleeve (300) in such a way that the flange (120) passes through the opening;
3. turning the outer sleeve (300) by an angle smaller than 360°, in particular by 45°, so that the flange engages behind the shoulder.

10. Fitting, in particular a drinking water fitting, comprising a pipe connection (1) according to any one of claims 1 to 8.

## Revendications

1. Raccord de tubulaire (1), notamment pour un Système de distribution d'eau potable, comprenant un premier manchon tubulaire (100) et un deuxième manchon tubulaire (200), le premier manchon tubulaire (100) et le deuxième manchon tubulaire (200) sont réalisés de telle sorte que le premier manchon tubulaire (100) peut être maintenu de façon sécurisée en torsion à l'aide d'une première complémentarité de formes (120, 230) formée au travers du premier et du deuxième manchon tubulaire (200) au niveau du deuxième manchon tubulaire (200) et le raccord de tubulaire comprenant une douille extérieure (300), notamment un écrou-raccord, fixable dans le plan axial par complémentarité de formes au niveau du deuxième manchon tubulaire (200), ladite douille extérieure permettant de maintenir le premier manchon tubulaire (100) à l'état relié dans le plan axial, dans lequel à l'état relié, le premier manchon tubulaire (100) est maintenu dans le plan axial à travers la douille extérieure (300) à l'aide d'une deuxième complémentarité de formes (120, 320) et dans lequel la deuxième complémentarité de formes (120, 320) comprend au niveau de la douille extérieure un épaulement (320) tournant au moins en partie, saillant vers l'intérieur dans le plan radial et le premier manchon tubulaire (100) comprenant un flasque (120) tournant au moins en partie, saillant vers l'extérieur dans le plan radial, dans lequel à l'état relié, le flasque (120) agrippe l'épaulement (320) par l'arrière, dans lequel le flasque (120) comprend notamment le contour extérieur, **caractérisé en ce que** le flasque (120) peut être poussé de façon traversante dans une première orientation de rotation par rapport à la douille extérieure au travers d'une ouverture délimitée par l'épaulement et ne peut être poussé de façon traversante par rapport à la douille extérieure (300) à travers une deuxième orientation de rotation.

2. Raccord de tubulaire (1) selon la revendication 1, **caractérisé en ce que** le premier manchon tubulaire (100) et le deuxième manchon tubulaire (200) sont réalisés de telle sorte que le premier manchon tubulaire (100) peut être maintenu fixement en rotation dans au moins deux orientations de rotation différentes, notamment dans précisément quatre orientations de rotation différentes à l'état relié via la première complémentarité de formes au niveau du deuxième manchon tubulaire (200), les orientations de rotation étant de préférence réparties de façon régulière sur l'ensemble de la plage angulaire.

3. Raccord de tubulaire (1) selon la revendication 2, **caractérisé en ce que** le premier manchon tubulaire (100) comprend un contour extérieur, notamment un contour extérieur polygonal, et que le deuxième manchon tubulaire (200) comprend un contour intérieur avec au moins un, de préférence quatre épaulements (230) orientés dans le plan axial interagissant à l'état relié avec respectivement une surface de contact du contour extérieur de façon à former la première complémentarité de formes.

4. Raccord de tubulaire (1) selon l'une quelconque des revendications 1 à 3, **caractérisé en ce que** le premier manchon tubulaire (100) comprend une saillie tubulaire (130) qui est logée à l'état relié dans un élargissement du deuxième manchon tubulaire (200), de sorte qu'une paroi intérieure du premier manchon tubulaire (100) et une paroi intérieure du deuxième manchon tubulaire (200) s'alignent de préférence, dans lequel la saillie tubulaire (130) et l'élargissement comprennent notamment un cône, de sorte que l'insertion du premier manchon tubulaire (100) dans le deuxième manchon tubulaire (200) permette d'atteindre un ajustage serré.

5. Raccord de tubulaire (1) selon l'une quelconque des revendications 1 à 4, **caractérisé en ce qu'**un joint (132), notamment un joint radial, est disposé entre le premier manchon tubulaire (100) et le deuxième manchon tubulaire (200).

6. Raccord de tubulaire (1) selon la revendication 1, **caractérisé en ce que** le deuxième manchon tubulaire (200) comprend un marquage (222), notamment un joint torique périphérique extérieur qui est recouvert par la douille extérieure (300) à l'état relié et n'est pas recouvert à l'état non relié.

7. Raccord de tubulaire (1) selon l'une quelconque des revendications 1 à 6, **caractérisé en ce qu'**à l'état relié, le raccord de tubulaire est plombé à l'aide d'un plomb de façon à ce que le raccord de tubulaire ne puisse s'ouvrir qu'en retirant le plomb.

8. Raccord de tubulaire (1) selon la revendication 7, **caractérisé en ce qu'**à l'état relié, le plomb fixe dans le plan axial la douille extérieure (300) au niveau du premier manchon tubulaire (100), dans lequel le plomb comprend notamment une bague de plomb maintenue dans une rainure du premier manchon tubulaire (100), dans lequel à l'état relié, la douille extérieure (300) est fixée dans le plan axial.

9. Procédé de raccordement d'un premier manchon tubulaire (100) à l'aide d'un deuxième manchon tubulaire (200) par utilisation d'un raccord de tubulaire (1) selon l'une quelconque des revendications précédentes, dans lequel le premier manchon tubulaire (100) est monté par complémentarité de formes au niveau du deuxième manchon tubulaire (200) de façon à ce que le premier manchon tubulaire (100) soit maintenu de façon sécurisée en torsion au niveau du deuxième manchon tubulaire (200), **caractérisé en ce que** les étapes suivantes sont réalisées :
1. vissage lâche de la douille extérieure (300) sur le deuxième manchon tubulaire (200) ;
2. orientation et introduction du deuxième manchon tubulaire (200) dans la douille extérieure (300) de telle sorte que le flasque (120) soit introduit à travers l'ouverture ;
3. torsion de la douille extérieure (300) d'un angle donné inférieur à 360°, notamment de 45°, de sorte que le flasque agrippe l'épaulement par l'arrière.

10. Robinetterie, notamment robinetterie d'eau potable, comprenant un raccord de tubulaire (1) selon l'une quelconque des revendications 1 à 8.
